(19) **Europäisches Patentamt European Patent Office Office européen des brevets**

(11) **EP 1 700 831 B1**

(12) **EUROPEAN PATENT SPECIFICATION**

(45) Date of publication and mention
of the grant of the patent:
**07.11.2007 Bulletin 2007/45**

(51) Int Cl.:
*C03B 19/12* (2006.01)    *C03B 20/00* (2006.01)
*C03C 1/00* (2006.01)    *C03C 3/06* (2006.01)

(21) Application number: **05005096.2**

(22) Date of filing: **09.03.2005**

(54) **Process for the production of monoliths by means of the sol-gel process**

Verfahren zur Herstellung von Monolithen durch ein Sol-Gel Verfahren

Procédé de fabrication de monolithes par voie sol-gel

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**13.09.2006 Bulletin 2006/37**

(73) Proprietor: **Degussa Novara Technology S.p.A.**
**20016 Pero (MI) (IT)**

(72) Inventors:
• **Boara, Giulio**
**26013 Crema (IT)**
• **Costa, Fulvio**
**27048 Sommo (IT)**

• **Rückemann, Andreas, Dr.**
**28047 Oleggio (Novara) (IT)**

(74) Representative: **Weber, Wolfgang et al**
**Evonik Degussa GmbH**
**DG-IPM-PAT**
**Postcode 84/339**
**Rodenbacher Chaussee 4**
**63457 Hanau (DE)**

(56) References cited:
**WO-A-20/04063105**    **US-A- 5 207 814**
**US-A- 5 236 483**    **US-A1- 2003 068 266**

**Description**

The invention relates to a process for the production of monoliths by means of the sol-gel process.

It is known that monoliths of silicon dioxide are produced by means of the sol-gel method by adding a tetraalkylammonium hydroxide, as a stabilizing agent, to a silicon dioxide dispersion, adjusting the isoelectric point by addition of ammonium hydroxide or an amine, establishing a pH of greater than 10.5, allowing the dispersion to gel and drying the gel body (US 6,209,357).

It is furthermore known to produce a shaped silicon dioxide glass article by means of the sol-gel method by preparing a silicic sol by hydrolysis of silicon alkoxide, mixing this sol with silicon dioxide particles, allowing the mixture to gel, drying the gel, sintering the dried gel in order to close the pores in the dried gel and then heating the sintered gel to a temperature of between 1,500 and 2,000 $\underline{o}$C (US 5,236,483).

It is furthermore known to produce synthetic glass by preparing a paste having a pH of less than 2.2 from pyrogenically prepared silica, water and acid, mixing alkoxysilane into this paste, adding a base in order to establish a pH of 2.8 to 3.6, forming a gel from the sol, drying the gel under supercritical conditions, heating the dried gel first at a temperature of 950 to 1,200 °C in a chlorine gas atmosphere and then in a chlorine-free atmosphere, in order to free the dried gel from the chlorine, and subsequently heating the gel to a temperature which is sufficient to convert the gel into a silicon dioxide glass (WO 02/074704).

It is furthermore known to produce objects from synthetic silicon dioxide glass by mixing an aqueous suspension of silicon dioxide with a silicon alkoxide solution, hydrolysing the mixture to form a sol, gelling the sol to form a wet gel, drying the wet gel to form a dry gel and sintering the dry gel to form an object (WO 01/053225).

The invention provides a process for the production of monoliths by means of the sol-gel process, comprising the following steps:

a. hydrolysis of an alkoxide in aqueous solution to form a hydrolysate and optionally evaporation to optimum concentration of the same,

b. addition of an oxide prepared by the pyrogenic route,

c. mixing of the hydrolysate of the alkoxide with the oxide prepared by the pyrogenic route to form a colloidal sol,

d. removal of coarse contents from the colloidal sol,

e. gelling of the colloidal sol in a mould,

f. optional replacement of the water contained in the resulting aerogel by an organic solvent,

g. drying of the aerogel,

h. heat treatment of the dried aerogel,

characterized in that the gelling of the colloidal sol is triggered by increasing the temperature.

a. Hydrolysis of an alkoxide in aqueous solution

Any desired metal alkoxide can be employed as the alkoxide. In particular, TEOS (tetraethoxysilane) can be employed.

Further alkoxides can be: Dynasil 40

The hydrolysis can be initiated by treating the ethoxysilane with a dilute acid, a hydrolysate being formed.

The hydrolysis of the alcoxide or the Dynasil 40 is preferably done in the range between 21 and 25 °C and the pH between 1,5 and 3, but these ranges can be extended up to conditions where the hydrolysis reaction is achieved in less than 4 h for a volume of around 30 1 and there are no side polycondensation reactions producing oligomeric $SiO_2$ agglomerates large enough to clog a 10 micron mesh. The TEOS/Water molar ratio should be sufficient to have a complete hydrolysis reaction in the case of the TEOS or to complete the formation of (poly)silicic acid in the case of Dynasil 40.

Several acids can be used to trigger the hydrolysis:

Inorganic acids like:HCl, $HNO_3$, $H_2SO_4$, HF which are known in the art. Usually for strong acids the pH is 2.

Organic acids like: citric acid, malonic acid, oxalic acid, succinic acid (hydrolysis reaction for this last acid needs use of ultrasound to proceed). Tartaric acid was also used but the salt produced after titration is not very soluble and crystals were present in the gel. Further work showed that this difficulty may be overcome. The use of other organic acids is not to be excluded. The advantage of using such acids is that the resulting gels detach easily from stainless steel molds.

The hydrolysate can be passed through a filter.

The filter can have a pore diameter of 1 to 12 micrometres, preferably 9 to 11 micrometres. After the hydrolysis, the alcohol formed may be removed from the aqueous solution (hydrolysate) unter conditions of reduced pressure.

b. Addition of an oxide prepared by the pyrogenic route

All the known oxides of metals and/or metalloids which are prepared by the pyrogenic route can be added to the hydrolysate as pyrogenic oxides.

The pyrogenic process for the preparation of oxides of metals and/or metalloids is known from Ullmann's Enzyklopädie der technischen Chemie [Ullmann's Encyclopaedia of Industrial Chemistry], 4th edition, volume 21, pages 462 to 475 (1982).

In the pyrogenic preparation of oxides of metals and/or metalloids, vaporizable compounds, such as, for example, chlorides, can be mixed with a combustible gas, such as, for example, hydrogen, and an oxygen-containing gas, such as, for example, air, and the components can then be reacted together in a flame.

The pyrogenically prepared oxides of metals and/or metalloids can be employed as a powder, as granules, as pastes and/or as a dispersion.

The preparation of the pastes and/or dispersions can be carried out by a known route by introducing the pulverulent pyrogenically prepared oxide of metals and/or metalloids into the dispersing medium, such as, for example, water, and treating the mixture mechanically with a suitable device.

Suitable devices can be: Ultra-Turrax, wet-jet mill, nanomizer etc,

The solids content of the dispersion / paste can be 5 to 80 wt.-%.

The dispersion and/or paste can contain a base, such as, for example, $NH_4OH$ or organic amines or quaternary ammonium compounds.

The pyrogenically prepared oxides of metals and/or metalloids can be added to the hydrolysate in the form of granules. In particular, granules based on silicon dioxide according to DE 196 01 415 A1 can be used. These granules have the characteristic data:

| | |
|---|---|
| Average particle diameter: | 25 to 120 $\mu$m |
| BET surface area: | 40 to 400 $m^2$/g |
| Pore volume: | 0.5 to 2.5 ml/g |
| Pore distribution: | No pores < 5 nm |
| pH: | 3.6 to 8.5 |
| Tamped density: | 220 to 700 g/l. |

They are prepared by dispersing pyrogenically prepared silicon dioxide in water and spray drying the dispersion.

In addition to better ease of handling, the use of granules has the advantage that less included air and therefore fewer air bubbles are introduced into the sol and consequently also into the gel.

A higher silicon dioxide concentration can furthermore be achieved by the use of granules. As a result, the shrinkage factor is lower, and larger glass components can be produced with the same equipment.

The amount of pyrogenically prepared oxide of metals and/or metalloids which is brought together with the hydrolysate can be as high as 20 to 40 % by weight.

The shrinkage factor during the production of the glass can be adjusted by the content of pyrogenically prepared oxides of metals and/or metalloids in the sol to be prepared according to the invention.

According to the invention, a shrinkage factor of 0.45 to 0.55 can advantageously be established.

The oxides according to table 1 can be employed as pyrogenically prepared oxides of metals and/or metalloids:

Table 1: Physico-chemical data of Aerosil

| Test method | | Standard types | | | | | | Special types | | | | |
|---|---|---|---|---|---|---|---|---|---|---|---|---|
| | | Aerosil 90 | Aerosil 130 | Aerosil 150 | Aerosil 200 | Aerosil 300 | Aerosil 380 | Aerosil OX 50 | Aerosil TT 600 | Aerosil MOX 80 | Aerosil MOX 170 | Aerosil COK 84 |
| Behaviour towards water | | Hydrophilic | | | | | | hydrophilic | | | | |
| Appearance | | loose white powder | | | | | | loose white powder | | | | |
| BET surface area[1] | $m^2/g$ | $90\pm15$ | $130\pm25$ | $150\pm15$ | $200\pm25$ | $300\pm30$ | $380\pm30$ | $50\pm15$ | $200\pm50$ | $80\pm20$ | $170\pm30$ | $170\pm30$ |
| Average size of the primary particles | nm | 20 | 16 | 14 | 12 | 7 | 7 | 40 | 40 | 30 | 15 | - |
| Tamped density approx. value[2] compacted goods (added "V") W goods (added "W") | g/l g/l g/l g/l | 80 120 | 50 120 | 50 120 50/75 | 50 120 50/75 120/150 | 50 120 50/75 120/150 | 50 130 | 130 | 60 | 60 | 50 | 50 |
| Loss on drying[3] (2 h at 105 °C) on leaving the supplier's works | % | <1.0 | <1.5 | <0.5[9] | <1.5 | <1.5 | <2.0 | <1.5 | <2.5 | <1.5 | <1.5 | <1.5 |
| Loss on ignition[4] [7] (2 h at 1,000 °C) | % | <1 | <1 | <1 | <1 | <2 | <2.5 | <1 | <2.5 | <1 | <1 | <1 |

EP 1 700 831 B1

4

(continued)

| Test method | | Standard types | | | | | | Special types | | | | |
|---|---|---|---|---|---|---|---|---|---|---|---|---|
| | | Aerosil 90 | Aerosil 130 | Aerosil 150 | Aerosil 200 | Aerosil 300 | Aerosil 380 | Aerosil OX 50 | Aerosil TT 600 | Aerosil MOX 80 | Aerosil MOX 170 | Aerosil COK 84 |
| pH[5] | | 3.7-4.7 | 3.7-4.7 | 3.7-4.7 | 3.7-4.7 | 3.7-4.7 | 3.7-4.7 | 3.8-4.8 | 3.6-4.5 | 3.6-4.5 | 3.6-4.5 | 3.6-4.3 |
| $SiO_2$[8] | % | >99.8 | >99.8 | >99.8 | >99.8 | >99.8 | >99.8 | >99.8 | >99.8 | >98.3 | >98.3 | 82-86 |
| $Al_2O_3$[8] | % | <0.05 | <0.05 | <0.05 | <0.05 | <0.05 | <0.05 | <0.08 | <0.05 | 0.3-1.3 | 0.3-1.3 | 14-18 |
| $Fe_2O_3$[8] | % | <0.003 | <0.003 | <0.003 | <0.003 | <0.003 | <0.003 | <0.01 | <0.003 | <0.01 | <0.01 | <0.1 |
| $TiO_2$[8] | % | <0.03 | <0.03 | <0.03 | <0.03 | <0.03 | <0.03 | <0.03 | <0.03 | <0.03 | <0.03 | <0.03 |
| HCl[8] [10] | % | <0.025 | <0.025 | <0.025 | <0.025 | <0.025 | <0.025 | <0.025 | <0.025 | <0.025 | <0.025 | <0.1 |
| Sieve residue[6] ocker method, 45 mm) | % | <0.05 | <0.05 | <0.05 | <0.05 | <0.05 | <0.05 | <0.2 | <0.05 | <0.1 | <0.1 | <0.1 |

1) in accordance with DIN 66131
2) in accordance with DIN ISO 787/XI, JIS K 5101/18 (not sieved)
3) in accordance with DIN ISO 787/XI, ASTM D 1208, JIS K 5101/23
4) in accordance with DIN 55921, ASTM D 1208, JIS K 5101/23
5) in accordance with DIN ISO 787/IX, ASTM D 1208, JIS K 5101/24
6) in accordance with DIN ISO 787/XVIII, JIS K 5101/20
7) based on the substance dried for 2 hours at 105 ºC
8) based on the substance ignited for 2 hours at 1,000 ºC
9) special packaging protecting against moisture
10) HCl content is a constituent of the loss on ignition

In a preferred form of the invention, the pyrogenically prepared silicon dioxide Aerosil OX 50, which is likewise listed in table 1, can be employed. In particular, the pyrogenically prepared silicon dioxide Aerosil OX 50 can be employed if a high UV transparency is not necessary.

The pyrogenically prepared silicon dioxide having the following physico-chemical properties which is known according to EP 1 182 168 A1 can furthermore be employed as the pyrogenically prepared oxide of metals and/or metalloids:

1. Average particle size ($D_{50}$ value) above $D_{50} \geq 150$ nm (dynamic light scattering, 30 wt.%)

2. Viscosity (5 rpm, 30 wt.%) $\eta \leq 100$ m.Pas

3. Thixotropy of the $T_i \left( \dfrac{\eta(5RPM)}{\eta(50RPM)} \right) \leq 2$

4. BET surface area 30 to 60 m$^2$/g

5. Tamped density TD = 100 to 160 g/l

6. Original pH $\leq 4.5$

These physico-chemical properties are determined by means of the following methods:

Particle size

Measurement method: Photon correlation spectroscopy (PCS) is a dynamic scattered light method with which particles in the range from approx. 5 nm to 5 $\mu$m can be detected. In addition to the average particle diameter, a particle size distribution can also be calculated as the measurement result.

Light source: 650 nm diode laser
Geometry 180° homodyne scattering
Amount of sample: 2 ml
Calculation of the distribution in accordance with the Mie theory

Procedure: 2 ml of dispersion (30 mol%) are introduced into a measuring cell, the temperature probe is inserted and the measurement is started. The measurement takes place at room temperature.

Viscosity

Measurement method: A programmable rheometer for analysis of complex flow properties equipped with standard rotation spindles is available.

Shear rates: 5 to 100 rpm
Measurement temperature: room temperature (23 ºC)
Dispersion concentration: 30 mol%

Procedure: 500 ml of dispersion are introduced into a 600 ml glass beaker and analysed at room temperature (statistical recording of the temperature via a measuring probe) at various shear rates.
BET : in accordance with DIN 66131
Tamped density: in accordance with DIN ISO 787/XI, K 5101/18 (not sieved)
pH: in accordance with DIN ISO 787/IX, ASTM D 1280, JIS K 5101/24.

The pyrogenically prepared silicon dioxide which can be employed according to the invention can be prepared by mixing a volatile silicon compound, such as, for example, silicon tetrachloride or trichloromethylsilane, with an oxygen-containing gas and hydrogen and burning this gas mixture in a flame.

The pyrogenically prepared silicon dioxide which can be employed according to the invention can advantageously be employed in the sol-gel process according to the invention in the form of dispersions in aqueous and/or non-aqueous solvents. It can advantageously be employed if glasses having a high UV transparency are to be produced.

In the case of particularly high purity requirements of the glass, a highly pure, pyrogenically prepared silicon dioxide which is characterized by a content of metals of less than 9 ppm can furthermore be employed as the oxide of metals and/or metalloids. It is described in the patent application DE 103 42 828.3 (030103 FH)

In a preferred embodiment of the invention, the highly pure silicon dioxide can be characterized by the following content of metals:

| Li | ppb < = 10 |
|----|-----------|
| Na | ppb < = 80 |
| K | ppb < = 80 |
| Mg | ppb < = 20 |
| Ca | ppb < = 300 |
| Fe | ppb < = 800 |
| Cu | ppb < = 10 |
| Ni | ppb < = 800 |
| Cr | ppb < = 250 |
| Mn | ppb < = 20 |
| Ti | ppb < = 200 |
| Al | ppb < = 600 |
| Zr | ppb < = 80 |
| V | ppb < = 5 |

The total metal content can then be 3,252 ppb (~3.2 ppm) or less.

In a further preferred embodiment of the invention, the highly pure pyrogenically prepared silicon dioxide can be characterized by the following content of metals:

| Li | ppb < = 1 |
|----|-----------|
| Na | ppb < = 50 |
| K | ppb < = 50 |
| Mg | ppb < = 10 |
| Ca | ppb < = 90 |
| Fe | ppb < = 200 |
| Cu | ppb < = 3 |
| Ni | ppb < = 80 |
| Cr | ppb < = 40 |
| Mn | ppb < = 5 |
| Ti | ppb < = 150 |
| Al | ppb < = 350 |
| Zr | ppb < = 3 |
| V | ppb < = 1 |

The total metal content can then be 1033 ppb (~1.03 ppm) or less.

The preparation of the highly pure, pyrogenically prepared silicon dioxide which can be employed according to the invention can be carried out by converting silicon tetrachloride into silicon dioxide by means of high temperature hydrolysis in a flame in a known manner and using here a silicon tetrachloride which has a metal content of less than 30 ppb.

In a preferred embodiment of the invention, a silicon tetrachloride which, in addition to silicon tetrachloride, has the following content of metals can be employed:

| Al | less than 1 ppb |
|----|-----------------|
| B | less than 3 ppb |
| Ca | less than 5 ppb |
| Co | less than 0.1 ppb |
| Cr | less than 0.2 ppb |

(continued)

| | |
|---|---|
| Cu | less than 0.1 ppb |
| Fe | less than 0.5 ppb |
| K | less than 1 ppb |
| Mg | less than 1 ppb |
| Mn | less than 0.1 ppb |
| Mo | less than 0.2 ppb |
| Na | less than 1 ppb |
| Ni | less than 0.2 ppb |
| Ti | less than 0.5 ppb |
| Zn | less than 1 ppb |
| Zr | less than 0.5 ppb |

Silicon tetrachloride having this low metal content can be prepared in accordance with DE 100 30 251 or in accordance with DE 100 30 252.

The main process for the preparation of pyrogenic silicon dioxide starting from silicon tetrachloride, which is reacted in a mixture with hydrogen and oxygen, is known from Ullmanns Enzyklopädie der technischen Chemie, 4th edition, volume 21, page 464 et seq. (1982).

The metal content of the silicon dioxide according to the invention is in the ppm range and below (ppb range).

The pyrogenically prepared silicon dioxide which can be employed according to the invention is advantageously suitable for the production of special glasses having outstanding optical properties.
The glasses produced by means of the silicon dioxide according to the invention have a particularly low adsorption in the low UV range.

The highly pure pyrogenically prepared silicon dioxide which can be employed according to the invention can be prepared, for example, by vaporizing 500 kg/h $SiCl_4$ having a composition according to table 1 at approx. 90 °C and transferring it into the central tube of a burner of known construction. 190 $Nm^3$/h hydrogen and 326 $Nm^3$/h air having 190 $Nm^3$/h hydrogen and 326 $Nm^3$/h air having an oxygen content of 35 vol.% are additionally introduced into this tube. This gas mixture is ignited and burns in the flame tube of the water-cooled burner. 15 $Nm^3$/h hydrogen are additionally introduced into a jacket jet surrounding the central jet in order to avoid caking. 250 $Nm^3$/h air of normal composition are moreover additionally introduced into the flame tube. After the reaction gases have cooled, the pyrogenic silicon dioxide powder is separated off from the hydrochloric acid-containing gases by means of a filter and/or a cyclone. The pyrogenic silicon dioxide powder is treated with water vapour and air in a deacidification unit in order to free it from adhering hydrochloric acid.

The metal contents are reproduced in table 2.

Table 1: Composition of $SiCl_4$

| Al | B | Ca | Co | Cr | Cu | Fe | K | Mg | Mn | Mo | Na | Ni | Ti | Zn | Zr |
|----|----|----|----|----|----|----|----|----|----|----|----|----|----|----|----|
| ppb | ppb | ppb | ppb | ppb | ppb | ppb | ppb | ppb | ppb | ppb | ppb | ppb | ppb | ppb | ppb |
| <1 | <30 | <5 | <0,1 | <0,2 | <0,1 | <0,5 | <1 | <1 | <0,1 | <0,2 | <1 | <0,2 | <0,5 | <1 | <0,5 |

Table 2: Metal contents of the silicon dioxides (ppb)

| [ppb] | Example 2a | |
|---|---|---|
| Li | 0.8 | < = 10 |
| Na | 68 | < = 80 |
| K | 44 | < = 80 |
| Mg | 10 | < = 20 |
| Ca | 165 | < = 300 |
| Fe | 147 | < = 800 |
| Cu | 3 | < = 10 |
| Ni | 113 | < = 800 |
| Cr | 47 | < = 250 |
| Mn | 3 | < = 20 |
| Ti | 132 | < = 200 |
| Al | 521 | < = 600 |
| Zr | 3 | < = 80 |
| V | 0.5 | < = 5 |
| | | |
| | $\Sigma$ 1,257 ppb = 1.26 ppm | $\Sigma$ = 3,255 ppb = 3.2 ppm |

A pyrogenically prepared silicon dioxide powder known from WO 2004/054929 having

- a BET surface area of 30 to 90 m$^2$/g,
- a DBP number of 80 or less,
- an average aggregate area of less than 25,000 nm$^2$,
- an average aggregate circumference of less than 1,000 nm, at least 70 % of the aggregates having a circumference of less than 1,300 nm,

can furthermore be used according to the invention as the pyrogenically prepared oxide of a metal and/or a metalloid.

In a preferred embodiment, the BET surface area can be between 35 and 75 m$^2$/g. Values between 40 and 60 m$^2$/g can be particularly preferred. The BET surface area is determined in accordance with DIN 66131.

In a preferred embodiment, the DBP number can be between 60 and 80. In the DBP absorption, the power uptake, or the torque (in Nm), of the rotating paddles of the DBP measuring apparatus on addition of defined amounts of DBP is measured, in a manner comparable to a titration. For the silicon dioxide which can be employed according to the invention, a sharply pronounced maximum with a subsequent drop at a particular addition of DBF results here.

In a further preferred embodiment, the silicon dioxide powder which can be employed according to the invention can have an average aggregate area of not more than 20,000 nm$^2$. An average aggregate area of between 15,000 and 20,000 nm$^2$ can be particularly preferred. The aggregate area can be determined, for example, by image analysis of the TEM images. In the context of the invention, aggregate is to be understood as meaning primary particles of similar structure and size which have fused together, the surface area of which is less than the sum of that of the individual isolated primary particles. Primary particles are understood as meaning particles which are initially formed in the reaction and can grow together to form aggregates in the further course of the reaction.

In a further preferred embodiment, the silicon dioxide powder which can be employed according to the invention can have an average aggregate circumference of less than 1,000 nm. An average aggregate circumference of between 600 and 1,000 nm can be particularly preferred. The aggregate circumference can likewise be determined by image analysis of the TEM images.

An embodiment in which at least 80 %, particularly preferably at least 90 % of the aggregates have a circumference of less than 1,300 nm can be preferred.

In a preferred embodiment, the silicon dioxide powder which can be employed according to the invention can assume, in an aqueous dispersion, a degree of filling of up to 90 wt.%. The range between 20 and 40 wt.% can be particularly preferred.

The determination of the maximum degree of filling in an aqueous dispersion is carried out by incorporating the powder into water in portions by means of a dissolver, without the addition of further additives. The maximum degree of filling is reached when, in spite of an increased stirrer output, either no further powder is taken up into the dispersion, i.e. the powder remains dry on the surface of the dispersion, or the dispersion becomes solid or the dispersion starts to form lumps.

The silicon dioxide powder which can be employed according to the invention can furthermore have a viscosity of less than 100 mPas, based on a 30 wt.% aqueous dispersion at a shear rate of 5 revolutions/minute. In particularly preferred embodiments, the viscosity can be less than 50 mPas.

The pH of the silicon dioxide powder which can be employed according to the invention, measured in a 4 per cent aqueous dispersion, can be between 3.8 and 5.

The silicon dioxide powder which can be employed according to the invention can be employed in the form of an aqueous dispersion.

The aqueous dispersion which can be employed according to the invention can have a content of silicon dioxide powder of between 5 and 80 wt.%. Dispersions having a content of silicon dioxide powder of between 20 and 40 can be particularly preferred. These dispersions have a high stability with a comparatively low structure. A dispersion of approx. 30 wt.% can be very particularly preferred.

In a preferred embodiment, an aqueous dispersion which can be employed according to the invention with 30 wt.% of silicon dioxide powder can have a viscosity which is less than 150 mPas at a shear rate of 50 rpm. The range below 80 mPas can be particularly preferred.

The aqueous dispersion which can be employed according to the invention can preferably have an average particle size of the aggregates of the silicon dioxide powder which is less than 200 nm. For particular uses, a value of less than 150 nm can be particularly preferred.

The dispersion which can be employed according to the invention can be stabilized by the addition of bases or cationic polymers or aluminium salts or a mixture of cationic polymers and aluminium salts or acids.

Bases which can be employed are ammonia, ammonium hydroxide, tetramethylammonium hydroxide, primary, secondary or tertiary organic amines.

c. Mixing of the hydrolysate of the alkoxide with the oxide prepared by the pyrogenic route to form a colloidal sol

Mixing of the hydrolysate of the alkoxide with the oxide of metals and/or metalloids prepared by the pyrogenic route can be carried out by initially introducing the hydrolysate into the mixing vessel and adding the oxide, optionally in the form of a dispersion.

Mixing of the hydrolysed solution with the Aerosil (fumed oxide) can be done with a disperser or other means with the objective to get a homogeneously dispersed liquid and a stable colloidal suspension able to go to the following steps without producing too many agglomerates, preferably producing no agglomerates at all.

The temperature at which the mixing of the oxide with the hydrolysate and/or the alkoxide is carried out can be 2 to 30 ºC, but preferably in the range 10 to 25 °C.

The mixing device can preferably be a device of the Ultra-Turrax type, as a result of which breaks in the gel are advantageously reduced.

A colloidal sol is obtained by mixing the hydrolysate with the pyrogenically prepared oxide of the metal and/or metalloid. Mixing of the hydrolysate with the pyrogenically prepared oxide of metals and/or metalloids should preferably be carried out such that a homogeneous dispersion or a homogeneous sol is obtained.

d. Removal of coarse contents from the colloidal sol

Centrifugation can be carried out in order to:

- obtain a more homogeneous sol able to give a more homogeneous gelation process and a gel that has better characteristics for the next steps

- separate eventual particles present in the sol that can give rise to impurities in the gel

- eliminate aggregates that have been produced by local gelation triggered by particular conditions of temperature or silica concentration or other reasons, like physical or chemical fluctuations (slow polycondensation), that occured during previous steps of the process.

The conditions of centrifugation time and centrifugation force field, should be such that no more than 15 wt.-% of the material is withdrawn and preferably no more than 5 wt.-%.

This colloidal sol can contain undesirable coarse particles which can lead to inhomogeneities in the glass body. These inhomogeneities cause trouble above all if the glass is to be used for the production of light-conducting fibres.

The removal of the coarse content from the colloidal sol can be carried out by centrifuging the colloidal sol. The particles which are larger or have a higher density are separated off by the centrifugation.

The centrifugation step may be advantageous if blanks are to be produced for the production of optical fibres from the colloidal sol.

After the hydrolysis of the alkoxide and/or after the addition of the oxide prepared by the pyrogenic route, the alcohol formed during the hydrolysis of the alkoxide, such as, for example, ethanol, can be evaporated out of the solution or mixture.

The ethanol evaporation is done to achieve gelling conditions which give a gel that has desirable properties for the rest of the process, like faster solvent-exchange. The evaporation is done in such a way that during it there is not an acceleration of the polycondensation reaction. If done in a rotating evaporator, the vacuum should be not so high as to produce boiling which can bring liquid in zones where the evaporator cannot act any more on them and not so small to be not practical for the purposes of the evaporation. As a first indication the evaporation can be done up to when the ethanol (concentration) in the solution is below 10 wt.-% provided that the concentration of silica in the solution remains low enough so that no clogs or agglomerates are spontaneously formed in the solution under evaporation. Further evaporation can be done, provided that if there is a formation of aggregates in the form of clogs or flakes, they can be eliminated by filtering or centrifugation.

### e. Gelling of the resulting colloidal sol in a mould

The triggering of the gelation is done by increasing the temperature.

Temperatures and pH to be achieved are chosen so to change the real part of the visco-elastic response function of the sol Gel, measured with an oscillatory rheometer, from below of at least $10^{-2}$ Pa, to values above 500 Pa and preferably above 10000 Pa in a period of time between few minutes and no more than 20 hours, where the resulting sample can be considered a Gel.

During the gelling phase the colloidal sol can be introduced into a mould which determines the final shape of the monolith.

The mould itself can be produced from polytetrafluoroethylenes, polyethylenes, polycarbonates, polymethyl methacrylates or polyvinyl chloride. A porous material chosen from the group consisting of graphite, silicon carbide, titanium carbide, tungsten carbide and mixtures thereof can be used, if the drying to xerogel is desired. Further materials can be:

various plastics, glass, metal, fibreglass, coated metal, ceramic and wood.

Plastic can be: polystyrene, polypropylene, polymethylpentene, fluorine-containing plastics, such as, for example, TEFLON® , and silicone rubber.

The surface of the mould should be smooth. If the mould is produced from glass, it is advisable to treat the glass surface with a treatment agent, such as, for example, alcohol or a long-chain organic acid. Alcohols which can be employed are:

Undecanoic acid, for example, can be employed as the long-chain organic acid.

These treatment agents can be diluted in a mixture with acetone, ethanol or other proven agents.

### f. Optional replacement of the water contained in the resulting aquagel by an organic solvent.

Replacement of the water in the gelled sol is necessary because water has too high a critical point. At the temperature of the drying phase, water can be aggressive both towards rustproof steel and towards the $SiO_2$ structure of the sol.

During the replacement of the water with a solvent, the solvent can be added by an exchange process, the exchange process being ended when the water within the gel has been completely reduced to a level of no damage to the gel in the drying phase.

Solvents which can be used are ketones, alcohols, acetates and alkanes. It may be advantageous, if a solvent which is miscible with water is used. Acetone in particular can preferably be used.

It may be advantageous if the replacement of the water contained in the aerogel by an organic solvent is carried out at a pH of approx. 4. By this means, washing out of $SiO_2$ oligomers which have not yet condensed completely and too severe a shrinkage can be prevented.

One embodiment of the invention can start with a low concentration of acetone in a mixture of water and acetone.

The content of acetone should not exceed 30 %.

The water content of the mixture of water and acetone should not tend abruptly towards zero during the replacement process. However, as soon as the water content of the exiting acetone/water mixture is less than around 2 %, the replacement can be continued with anhydrous acetone.

The process for the replacement of the water by acetone can be carried out in individual vessels. It is also possible to arrange several vessels in series in an array and to pass the mixture of water and acetone successively through the connected vessels.

In another embodiment of the procedure is preferable to have a first flux of water at the same pH and temperature in the gel as the one used to trigger gelation. Then the pH of the washing water is slowly brought to 7. This optional procedure is done to take out from the water embedded in the gel the salts that may cause, if not removed, nucleation centers during consolidation giving origin to cristobalization and consequent material non homogeneity or other compounds that can give origin to impurites in the final glass.

Current process starts by exchanging the water with an acetone/water solution whose acetone concentration keeps increasing with time. The ways of doing the solvent exchange can be classified in two families. The procedures stop when a specific concentration of water is reached and it does not change significantly after a period of rest.

There are several procedures of exchange which can be done i.e. a continuous flux or fill-empty-procedure.

### A. Continuous Flux

A continuous flux of solvent washes the gel. The rate of the flux is a function of shape and size. The acetone concentration in the flux increases with time. Usually many samples are connected in series. The flux value is chosen in function of the size and form of the sample. The criteria is that the flux should be not so small as to last a very long time making the procedure impractical but not so fast as to consume a lot of solvent. In practice flow can be started from few ml/h and increased up to tens or hundreds of ml/min if the water concentration at the exit side, after having flux "washed" the sample(s) is increasing. The temperature should not be too high so as to induce excessive gas formation in the solvent and specially into the gel pores and not so low as to slow down the solvent transport process. In practice the temperature range is chosen by a procedure that starts with room temperature and is optimised by increasing it when the rate of change in water concentration decreases by one order of magnitude or more. This occurs in the later stages of the process when water concentration is below at least 50 % in volume.

### B. Fill-Empty fluid

The containers where the samples are contained are filled with solvent at a given acetone concentration, left there and then are emptied under saturated atmosphere. The containers are then re-filled with another solution at higher acetone concentration. This procedure is repeated several times. Criteria to choose the frequency of changes are given by the fact that it is convenient to do less frequent changes but the difference in concentration between the new bath and the actual acetone concentration measure has to be as high as possible. This has to be compatible with the fact that too high a difference can induce tensions that can damage the gel. In practice a 20 % difference is suitable but even 40 % could be supported. Criteria to choose the temperature are similar to the ones described in the previous section.

### C. Stop signal - water content

The usually followed procedure foresees that the water concentration remaining in the gel before going to the drying step should be close to 0,5 % in order to avoid the gel cracking. It has been observed however that some large samples (gel tubes of 160 mm diameter) do not crack even for water concentrations in the 2-4 % range. It has to be said that around 1/3 of the solvent exchange time is spent in lowering the water concentration from a few % to the 0,5 % set point.

Furthermore, it has been observed that the distribution of the water concentration inside the gel can be quite inhomogeneous (about one order of magnitude difference between the concentration measured in the surface and in the internal part of the gel body, depending on the sample size and the particular procedure). The findings show that having a more homogeneous distribution can be as important as having a low level of water. So in practice samples with high water concentrations of 4 % or above in the gel can be suitable to go to the drying step if enough time is left to allow a homogenisation of water concentration inside the sample. To achieve this there may not be the need of fluxing. Criteria to choose the operating temperature are similar to the ones described in the previous section.

In a preferred embodiment of the invention, a purification step can be carried out between the individual vessels in order to remove any gel/sol particles present in the mixture of water and acetone. This purification step can be carried out by means of a filter.

g. Drying of the aquagel

Drying of the aquagel obtained can be carried out in an autoclave. The drying conditions, such as pressure and temperature, can be adjusted to either supercritical or below-critical values.

This procedure objective is to dry the gel without introducing/increasing tension in the gel that can give origin to cracks or breakages in this or the following steps either in the dried gel or in the glass. Samples are introduced in a closed container that can stand pressure and temperature, usually an autoclave. Eventually a given amount of solvent of the same nature as the one present in the gel pores is added to the container. The amount is chosen so as to get the desired pressure inside the closed container when the maximum temperature of operation is achieved.

The pressure is first increased by introducing a chemically inert gas. Nitrogen is used for economic reasons. The pressure to be achieved is a function of the desired maximum total pressure, which can be above or even below the critical pressure of the solvent in the gel. It has to be high enough so as to get an integer gel without cracks at the end of the process. The value usually is taken to be few to several tens of bars and in any case is below the critical pressure of the solvent in the gel. Higher pressures may also be used.

Once the pressure has been increased the temperature is raised even up to values above the boiling point of the solvent embedded in the gel for the pressure present in the container. It is recommended to achieve temperatures in the range of the critical temperature of the solvent in the gel but it has also been shown that if the conditions of the original wet gel:

- water concentration homogeneity
- residual water concentration in gel
- low tension in the wet gel
- strength of the wet gel silica network

are suitable the temperature to be reached can be several degrees K lower than the critical one and still the resulting dry gel is not cracked.

Then the sample is left for a few minutes at those thermodynamic conditions and then the pressure is released. The rate of release is chosen to be fast enough to reduce overall process time but not so fast as to crack the gel due to too strong pressure gradients inside the dry gel (aerogel).

The currently used conditions are schematically indicated in the following

$N_2$ atmosphere up to 45 bar → Temperature increase usually at 5 °C/h to at least 225 °C but usually to 250 °C. Pressure achieved is usually 58 bar. It has been observed that also drying can be done at 30 bar (see application NO2003A000001). Pressure is released at 5 bar/h.

It has been noticed that the solvent in the wet gel undergoes chemical reactions in the autoclave producing high molecular weight organic moieties (a black/browning tar) which can also remain inside the dried gel. It is convenient to minimize the amount of such moieties to reduce the amount of calcinations to be done and the amount of energy liberated by such reaction inside the oven and the amount of gas (CO, $CO_2$, $H_2O$) produced in the following heath treatment during calcination. It has been observed that reducing the maximum temperature reached to below 250 °C by several °C can significantly reduce such moieties.

After the pressure is reduced to atmospheric pressure vacuum is applied to withdraw as much adsorbed organic gas (residual solvent and eventual reaction products formed in the autoclave during the previous cycle) as possible, following by Nitrogen washing. This washing procedure is repeated several times. Faster procedures with heating rates in excess of 20 °C/h and total duration of 14 h have also been applied but not enough statistics to conclude on yields. The dried gel is called aerogel.

h. Heat treatment of the dried aerogel

The process is usually divided into three stages.

1. Calcination in oxygen containing atmosphere. The sample is placed in the oven. A vacuum is applied and then an oxygen atmosphere. The temperature is raised to 800 °C at a slow enough rate to avoid excessive gas generation due to burning products which can cause pressure inside the gel/aerogel with the consequent cracking of the aerogel. Several cycles of vacuum/oxygen are applied.

---

2. Dehydration/Purification. Done in a chlorine containing atmosphere at 800 °C (HCl or/and $SOCl_2$ using He as carrier gas in concentration He:HCl around 10:1). This cycle lasts several days for the largest 80 mm glass tubes.

3. Consolidation. Done in He plus eventually a slight amount of oxygen above 1300 °C and below 1450 °C.

These processes are done with the use of vacuum during the heath treatment, as described in patent application N02001A000006, to avoid (diminish) bubble formation in glass bodies, particularly high temperature bubbles during pulling of optical fibres.

Further on the process can be done as follows:

A vacuum is created in the oven where the sample is placed. Then at room temperature a mixed atmosphere $O_2$/HCl is introduced. The proportions are chosen to be first rich enough in oxygen to start the calcinations of the organics, but at the same time to have HCl introduced in the aerogel pores from the beginning. Then the temperature is raised in several steps to temperatures below 800 °C, applying vacuum at those intermediate temperatures and then introducing mixed atmosphere $O_2$/HCl with increasing concentration of HCl. Finally when the temperature reaches around 800 °C the atmosphere is pure HCl.

The overall duration of cycle up to this point is a few to several hours, depending on the sample size and oven-heating rate. If the oven chamber, where the Aerogel is heat treated, has cold zones or other zones, where $H_2O$ is present, a substance, which reacts with water producing a gas that does not condense at low temperatures, like $SOCl_2$, is introduced. In this last case the temperature is reduced below 600 °C and preferably below 450 °C to avoid the occurrence of undesired reactions. The oven chamber is again cleaned with vacuum and then the temperature is raised up to above 1300 °C in He atmosphere plus optionally oxygen to consolidate the aerogel to glass.

The overall duration of this cycle is between 21 to 28 hours depending on the size of the sample (the larger the longer) and on the oven characteristics. By improving characteristics of the oven like cooling down/heating up times and reducing cold zones, where water can condense, the overall duration could be reduced further.

The previous procedures can be further modified to achieve some characteristic variations in the glass properties. It has been observed that the use of oxygen at 800 °C before the heating up to achieve consolidation and/or the use of a $He/O_2$ atmosphere during consolidation can give variations to the material properties including:

higher viscosity
lower refractive index
better behaviour during drawing The results show that the use of $SOCl_2$ as chlorinating agent at 800 °C can give a glass material with less light dispersion.

The heat treatment of the dried aerogel is carried out in order to produce a sintered glass body from the porous aerogel object. The heat treatment can comprise the following four steps:

A. removal of the residual solvent contents which adhere to the aerogel by means of calcination,

B. purification of the aerogel,

C. consolidation of the aerogel to obtain a glass body,

D. cooling of the glass body.

The heat treatment can be carried out under a separate gas atmosphere, it being possible for the gas atmosphere to assist the particular purpose of the steps of the heat treatment.

The calcination according to step A), which is intended to serve to remove the organic solvents, can be carried out under an oxygen atmosphere at a temperature of 550 ºC to 800 ºC. This calcining step can be ended when no further evolution of CO or $CO_2$ is detected.

The purification of the aerogel according to step B) can take place using a chlorinating agent. Thus, for example, HCl, $Cl_2$, $SOCl_2$ and others can be used as the chlorinating agent.

If appropriate, a noble gas, such as, for example, helium, can additionally used as a carrier gas.

If appropriate, if the glass body to be produced is to have an IR transparency, complete dehydration of the aerogel can be achieved by carrying out the purification in an anhydrous atmosphere.

In a preferred embodiment of the invention, the purification can be carried out by means of $SOCl_2$ at a temperature of 200 to 600 °C. A more extensive purity of the glass and higher transparency, in particular in the UV range, can be obtained if a pyrogenically prepared silicon dioxide Aerosil® VP EG-50 is used as the starting substance.

The consolidation of the aerogel according to step C) in order to obtain a glass body can be carried out under a noble gas atmosphere, such as, for example, helium in a mixture with oxygen, it being possible for the oxygen concentration to be 2 to 5 %. The consolidation can be carried out at a temperature of 600 to 1,400 °C.

During the heating up phase, vacuum can be applied in order to remove any bubbles contained in the aerogel. This heating up phase is particularly suitable in the temperature range from 600 to 800 °C.

The actual consolidation phase can be initiated with the heating up from 600 to 800 oC to a temperature of 1,300 to 1,400 oC, it then being possible for this temperature range to be retained for a sufficient period of time.

Cooling of the resulting glass body according to step D) can be carried out at a rate of up to 5 °C/minute, preferably 4 to 1 °C/minute, in the range from 1,400 to 900 °C.

Examples

Example 1

To 100 ml (0,44 moles) of tetraethylorthosilicate (TEOS) are added, under vigorous stirring, 80 ml of a solution of HCl, 0.01 N, in water.

After about 60 minutes a limpid solution is obtained. To this solution are added 57.8 g of colloidal fumed silica powder (Aerosil OX50 - Degussa), prepared from silicon tetrachloride by oxidation at high temperatures. The mixture obtained is homogenized using a high-speed mixer working at 10000 rpm for a duration of about twenty minutes, and then the solution is centrifuged at 3,000 rpm.

The homogeneous dispersion obtained is poured into cylindrical containers of glass with a diameter of 5.0 cm and height of 2.0 cm, which are hermetically closed, placed in an oven. The temperature is slowly raised and then maintained at 50 °C. The duration of this last operation is around 12 hours.

The gel, which has been obtained, is suitably washed with acetone and subsequently dried in an autoclave at a temperature of 250 °C and 59 bar. The autoclave is then pressurised with nitrogen at room temperature up to the pressure of 50 bar. The heating of the autoclave is then started, until the temperature of 260 °C is reached. With increasing temperature values, the pressure inside the autoclave increases up to 60 bar, and such a pressure value is kept constant by acting on the vent valves. With the temperature being still kept constant at 260 °C, by acting on the vent valve, the pressure inside the autoclave is then caused to decrease down to room pressure, at the speed of 15 bar/hour. The solvent contained inside the autoclave is thus removed. The last traces of such a solvent are removed by washing the autoclave with a slow stream of nitrogen for about 15 minutes and/or using vacuum.

A dry gel, generally called aerogel is obtained. The gel is moved to an oven where it is calcinated at a temperature of 800 °C in an oxidizing atmosphere.

During the heating, the residual organic products coming from the treatment in the autoclave are burnt.

The disk of silica aerogel, after calcination, is subjected to a stream of helium containing 2 % of chlorine at a temperature of 800 degree °C and for a duration of 30 minutes to remove the silanolic groups present. The aerogel disk is finally heated in a helium atmosphere to a temperature of 1400 degree °C for the duration of one hour so that the silica reaches complete densification.

After cooling, the disk reaches the desired final dimensions (diameter 2.5 cm and height 1.0 cm), maintaining a homothetic ratio with the form of the initial aerogel determined by the initial mould.

The densified material has the same physicochemical characteristics as the silica glass obtained by other processes.

**Claims**

**1.** Process for the production of monoliths by means of the sol-gel process, comprising the following steps:

    a. hydrolysis of an alkoxide in aqueous solution to form a hydrolysate and optionally evaporation to optimum concentration of the same,
    b. addition of an oxide prepared by the pyrogenic route,
    c. mixing of the hydrolysate of the alkoxide with the oxide prepared by the pyrogenic route to form a colloidal sol,
    d. removal of coarse contents from the colloidal sol,
    e. gelling of the colloidal sol in a mould,
    f. optional replacement of the water contained in the resulting aerogel by an organic solvent,
    g. drying of the aerogel,
    h. heat treatment of the dried aerogel,

**characterized in that** the gelling of the colloidal sol is triggered by increasing the temperature.

2. Process for the production of monoliths by means of the sol-gel process according to claim 1, **characterized in that** in step a) the hydrolysate is passed through a filter.

3. Process for the production of monoliths by means of the sol-gel process according to claim 1, **characterized in that** the gelling in step d) is carried out with a shrinkage factor of 0.45 to 0.55.

**Patentansprüche**

1. Verfahren zur Herstellung von Monolithen mit Hilfe des Sol-Gel-Verfahrens, umfassend die folgenden Schritte:

   a. Hydrolyse eines Alkoxids in wässriger Lösung zur Bildung eines Hydrolysats und gegebenenfalls Verdampfung zur optimalen Konzentrierung desselben,
   b. Zugabe eines Oxids, das durch den pyrogenen Weg erhalten wurde,
   c. Mischen des Hydrolysats von dem Alkoxid mit dem durch den pyrogenen Weg hergestellten Oxid zur Bildung eines kolloidalen Sols,
   d. Entfernen von grobem Gehalt des kolloidalen Sols,
   e. Gelieren des kolloidalen Sols in einer Form,
   f. optionales Ersetzen des Wassers, das in dem resultierenden Aerogel enthalten ist, durch ein organisches Lösungsmittel,
   g. Trocknen des Aerogels,
   h. Wärmebehandeln des getrockneten Aerogels, **dadurch gekennzeichnet, dass** das Gelieren des kolloidalen Sols durch Erhöhen der Temperatur ausgelöst wird.

2. Verfahren zur Herstellung von Monolithen mit Hilfe des Sol-Gel-Verfahrens gemäß Anspruch 1, **dadurch gekennzeichnet, dass** bei dem Schritt a) das Hydrolysat durch einen Filter geführt wird.

3. Verfahren zur Herstellung von Monolithen mit Hilfe des Sol-Gel-Verfahrens gemäß Anspruch 1, **dadurch gekennzeichnet, dass** das Gelieren in dem Schritt d) mit einem Schrumpfungsfaktor von 0,45 bis 0,55 ausgeführt wird.

**Revendications**

1. Procédé de production de monolithes au moyen du procédé sol-gel, comprenant les étapes suivantes :

   a. hydrolyse d'un alcoxyde en solution aqueuse pour former un hydrolysat et facultativement évaporation à la concentration optimale de ce dernier,
   b. addition d'un oxyde préparé par voie pyrogénique,
   c. mélange de l'hydrolysat de l'alcoxyde avec l'oxyde préparé par voie pyrogénique pour former un sol colloïdal,
   d. élimination des contenus grossiers du sol colloïdal,
   e. gélification du sol colloïdal dans un moule,
   f. remplacement facultatif de l'eau contenue dans l'aérogel obtenu par un solvant organique,
   g. séchage de l'aérogel, et
   h. traitement thermique de l'aérogel séché,

   **caractérisé en ce que** la gélification du sol colloïdal est déclenchée par l'augmentation de la température.

2. Procédé de production de monolithes au moyen du procédé sol-gel selon la revendication 1, **caractérisé en ce qu'**à l'étape a), l'hydrolysat est passé au travers d'un filtre.

3. Procédé de production de monolithes au moyen du procédé sol-gel selon la revendication 1, **caractérisé en ce que** la gélification à l'étape d) est réalisée avec un facteur de rétrécissement de 0,45 à 0,55.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6209357 B
- US 5236483 A
- WO 02074704 A
- WO 01053225 A
- DE 19601415 A1
- EP 1182168 A1
- DE 10342828
- DE 10030251
- DE 10030252
- WO 2004054929 A

### Non-patent literature cited in the description

- Ullmann's Encyclopaedia of Industrial Chemistry. 1982, vol. 21, 462-475
- Ullmanns Enzyklopädie der technischen Chemie. 1982, vol. 21, 464